# EUROPEAN PATENT APPLICATION

(11) **EP 4 650 398 A1**
(43) Date of publication of application: **19.11.2025**
(21) Application number: 24900783.2
(22) Date of filing: 30.08.2024
(51) Int. Cl.: C08L 67/04, C08L 33/06, C08L 25/14

(54) **POLYLACTIDE RESIN COMPOSITION**

(30) Priority: 06.12.2023 KR 20230175673; 20.08.2024 KR 20240111386
(71) Applicant: LG Chem, Ltd., Seoul 07336 (KR)
(72) Inventor: CHO, Jeong Hun, Daejeon 34122 (KR); KIM, Sehoon, Daejeon 34122 (KR); OH, Wan Kyu, Daejeon 34122 (KR)
(74) Representative: Goddar, Heinz J.
(86) International application number: PCT/KR2024/012974
(87) International publication number: WO 2025/121595

(57) **Abstract**

The polylactide resin composition according to the present disclosure has the effects of adjusting the degree of optical isomerism of polylactic acid and also adjusting the amount of a compound having an epoxy group used, thereby enabling improvement of neck-in.

## Description

### [TECHNICAL FIELD]

### CROSS-REFERENCE TO RELATED APPLICATION(S)

This application claims priority to and the benefit of Korean Patent Application No. 10-2023-0175673, filed on December 6, 2023, and Korean Patent Application No. 10-2024-011138, filed on August 20, 2024, with the Korean Intellectual Property Office, the disclosures of which are incorporated herein by reference in their entirety.

The present disclosure relates to a polylactide resin composition.

### [BACKGROUND]

LDPE is a typical resin that is often used for film applications, and has both long chain and short chain branch structures. Due to these characteristics, LDPE has high melt strength, fast productivity, and excellent molding stability. In addition, LDPE does not change its physical properties significantly even at high processing temperatures, and a film can be produced even under high-temperature processing conditions.

In contrast to LDPE, polylactic acid (PLA) has low melt strength and melt elasticity due to its linear structural characteristics, which reduces molding stability during film production. If the production speed is increased to improve productivity, the neck-in phenomenon increases, and thus there is a limit for making a film thin in consideration of the processability. In addition, there is a drawback that edge weave becomes severe during the molding process, and thus the deviation in the width and thickness of the produced film become severe. The neck-in phenomenon is a phenomenon in which a film coming out through an extrusion process is pushed into the inward, which can increase the film thickness and cause large variations, and so improvement is required in terms of production cost and process stability.

Since polylactic acid alone cannot secure film properties similar to LDPE, it may be improved by forming a mixed composition with other resins or by changing the structure using a compatibilizer. When forming a mixed composition with other resins, the compatibility (miscibility) between the two resins must also be considered, and structural changes through copolymerization or chain extenders may cause issues such as condition optimization (processing load, etc.) and color.

Therefore, in order to improve the neck-in phenomenon of polylactide resin, the present disclosure aims to provide a polylactide resin composition that adjusts the degree of optical isomerism of polylactic acid and can improve the neck-in phenomenon using only a compound having an epoxy group.

### [DETAILED DESCRIPTION OF THE INVENTION]

### [Technical Problem]

There is provided a polylactide resin composition which is improved in reducing neck-in phenomenon.

### [Technical Solution]

In order to achieve the above object, provided herein is a polylactide resin composition comprising: a polylactide resin in which a D content in the polylactide resin is 3 to 45 wt.%, and a compound having an epoxy group.

The term "polylactide resin" as used herein is defined to collectively refer to a homopolymer or a copolymer comprising the following repeating units.

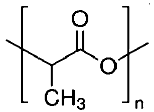

The polylactide resin can be prepared by a process including the step of forming the repeating unit by ring-opening polymerization of lactide monomers. The polymer obtained after completion of the ring-opening polymerization and the repeating unit formation process may be referred to as the "polylactide resin".

Wherein, "lactide monomer" can be defined as follows. Generally, "lactide monomer" may be classified into L-lactide composed of L-lactic acid, D-lactide composed of D-lactic acid, and meso-lactide composed of one L-form and one D-form. Further, a mixture of L-lactide and D-lactide in a ratio of 50:50 is referred to as D,L-lactide or rac-lactide. It is known that, when polymerization is carried out by using only L-lactide or D-lactide having high optical purity among these lactides, L- or D-polylactide (PLLA or PDLA) having high stereoregularity is obtained, and that such polylactide is rapidly crystallized and has high crystallinity compared to a polylactide having low optical purity.

In particular, according to the present disclosure, a polylactide resin in which a D content in the polylactide resin is 3 to 45 wt.% is used. The polylactide resin is prepared by ring-opening polymerization of a lactide monomer, wherein the "D content" refers to the D-lactide content relative to the total weight of the lactide monomer constituting the polylactide resin. For example, when a polylactide resin is prepared using only meso-lactide, L and D in the polylactide resin exist in a ratio of 1:1, and thus the D content is 50 wt.%.

When the D content is less than 3 wt.%, there is a problem that even if a compound having a large amount of epoxy groups is used, the formation of a branched structure is insufficient, the melt strength is not significantly improved, and thus the change in physical properties is not significant even when producing a film. In addition, when the D content exceeds 45 wt.%, there is a problem that it is difficult to prepare polylactide having a high D content because the forms existing in nature are mostly L-lactic acid.

Preferably, according to the present disclosure, a polylactide resin having a D content of 4 wt.% or more, 5 wt.% or more, 6 wt.% or more, 7 wt.% or more, 8 wt.% or more, 9 wt.% or more, or 10 wt.% or more; and 40 wt.% or less, 35 wt.% or less, 30 wt.% or less, 25 wt.% or less, or 20 wt.% or less is used.

Meanwhile, when preparing a polylactide resin by lactide ring-opening polymerization, the composition of lactide (L-lactide, D-lactide, and meso-lactide) can be adjusted to thereby adjust the D content in the polylactide resin. Further, the prepared polylactide resin is hydrolyzed and then converted into methyl lactate through esterification, and the total ratio of MDL in the methyl lactate (methyl L-lactate (MLL) and methyl D-lactate (MDL)) can be confirmed by gas chromatography to analyze the D content in the polylactide resin.

Preferably, the polylactide resin is characterized in that a melting point peak exists in a region less than 160°C in the DSC (differential scanning calorimetry) curve. And, the polylactide resin is observed to have a glass transition temperature of 50 to 60°C in the DSC (differential scanning calorimetry) curve.

In addition, the polylactide resin used in the present disclosure in which a D content in the polylactide resin is 3 to 45 wt.% is different from a PLA stereocomplex formed by mixing poly(L-lactide) (PLLA) and poly(D-lactide) (PDLA), and a polylactide block copolymer formed by covalently bonding a poly-L-lactide segment having L-lactide as a main component and a poly-D-lactide segment having D-lactide as a main component. In the case of the polylactide resin used in the present disclosure, the melting point peak is observed in a region less than 160°C in the DSC (differential scanning calorimetry) curve, but is distinguished in that in the case of the PLA stereocomplex and the polylactide block copolymer, the melting point peak is observed in the region of 170°C or more, and in the case of the PLA stereocomplex, one melting point peak is further observed in the range of 220 to 230°C.

Preferably, the polylactide resin used in the present disclosure has a weight average molecular weight of 70,000 to 400,000. More preferably, the polylactide resin used in the present disclosure has a weight average molecular weight of 80,000 or more, 90,000 or more, or 100,000 or more; and 300,000 or less, 250,000 or less, or 200,000 or less.

Preferably, the polylactide resin used in the present disclosure has a number average molecular weight of 50,000 to 100,000. More preferably, the polylactide resin used in the present disclosure has a number average molecular weight of 55,000 or more, or 60,000 or more; and 90,000 or less, 85,000 or less, or 80,000 or less.

In addition, the polylactide resin composition according to the present disclosure further comprises a compound having an epoxy group in addition to the polylactide resin. Although not theoretically limited, the epoxy group can react with a terminal group of the polylactide resin to change the linear structure of the polylactide resin into a branched structure, and due to this structure, the melt strength is improved (elasticity is increased), and the neck-in phenomenon can be improved during film production.

The compound having an epoxy group preferably contains two or more epoxy groups in its molecular structure for branching the polylactide resin. In addition, the molecular weight of the compound having an epoxy group is preferably 100 to 10,000. As an example, an epoxy-based compatibilizer having the following structure can be used, and Joncryl ADR 4468 (BASF) can be used as a commercially available product. 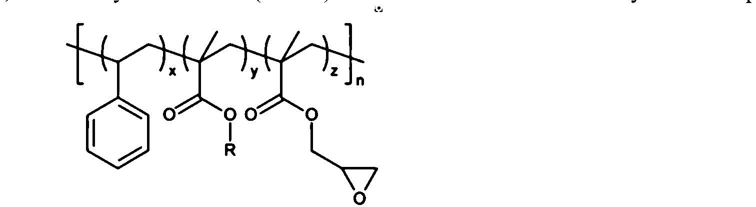 wherein, R is a C₁₋₂₀ alkyl, and each of x, y, and z is an integer of 1 or more and 20 or less.

Preferably, the polylactide resin composition of the present disclosure contains 0.1 to 5.0 parts by weight of the compound having an epoxy group based on 100 parts by weight of the polylactic acid resin. If the amount of the compound having an epoxy group is less than 0.1 parts by weight, the formation of a branched structure of the polylactide resin is insufficient and thus, the melt strength improvement effect is slight, and if the amount of the compound having an epoxy group is greater than 5.0 parts by weight, a polylactide resin with an ultra-high molecular weight is prepared, which causes a problem of deteriorating the film forming processability.

Meanwhile, the polylactide resin composition according to the present disclosure is substantially free of other components except for the polylactide resin and the compound having an epoxy group. The term 'substantially free of' means that it contains 0.1 parts by weight or less, preferably 0.01 parts by weight or less, based on 100 parts by weight of the polylactide resin composition according to the present disclosure.

Meanwhile, the method for preparing a polylactide resin composition according to the present disclosure described above is not particularly limited as long as it is a method of mixing the above-mentioned polylactide resin and compound having an epoxy group. As an example, each of the above components can be prepared by a melt blending method.

### [ADVANTAGEOUS EFFECTS]

As mentioned above, the polylactide resin composition according to the present disclosure has the effects of adjusting the degree of optical isomerism of polylactic acid and also adjusting the amount of a compound having an epoxy group used, thereby enabling improvement of neck-in.

### [DETAILED DESCRIPTION OF THE EMBODIMENTS]

Hereinafter, embodiments of the present disclosure will be described in more detail by way of examples. However, the following examples are presented for illustrative purposes only, and the scope of the invention is not defined by them.

### Preparation Example: Preparation of polylactide resin

### Preparation Example 1

9.4kg of L-LT + 0.6kg of Meso-LT were placed in a 1 Gal reactor, vacuum dried at 60°C for 1 hour, and then heated to 150°C to dissolve lactide. Then, Sn(Oct)₂ and 2-ethylhexanol were dissolved in toluene (2.5 mL) and introduced into a reactor. At this time, the molar ratio of lactide and Sn(Oct)₂ was 40,000:1, and 2-ethylhexanol was added in an amount of 0.2 mol% relative to lactide. Then, the temperature was slowly increased to 180°C to avoid significant instantaneous heating, and the temperature was adjusted to 180°C, and then the reaction was performed for 3 hours. After the reaction was completed, the reaction product was passed through a water bath to obtain polylactide resin (PLA Pellet) in a strand manner. The prepared pellet was vacuum-dried at >40°C to sufficiently dry the moisture.

### Preparation Example 2

A polylactide resin (PLA Pellet) was prepared in the same manner as in Preparation Example 1, except that 7.5 kg of L-LT + 2.5 kg of Meso-LT were used.

### Preparation Example 3

A polylactide resin (PLA Pellet) was prepared in the same manner as in Preparation Example 1, except that 10 kg of L-LT was used.

### Preparation Example 4

A polylactide resin (PLA Pellet) was prepared in the same manner as in Preparation Example 1, except that 9.8 kg of L-LT + 0.2 kg of Meso-LT were used.

### Example: Preparation of polylactide resin composition

The components listed in Table 1 below was subjected reaction extrusion using a 190 extruder equipment (BA-19, Bautek). Specifically, 1 kg of the polylactide resin was mixed with the components (compounds having epoxy groups) listed in Table 1 below and extruded at a screw speed of 200 rpm, wherein the maximum temperature was adjusted (190 to 230°C) to obtain PLA pellets. The weight average molecular weight of the obtained PLA pellets was measured using GPC (Gel Permeation Chromatography) under the following conditions, and the melting point and glass transition temperature were measured using DSC (Differential Scanning Calorimetry) according to the following method. The results are shown in Table 1 below.
(1) Measurement conditions for weight average molecular weight (Mw)
- Column: PL mixed B x 2
- Solvent: THF
- Flow rate: 1.0 ml/min
- Sample concentration: 1.5 mg/ml
- Injection volume: 100 µl
- Column temperature: 40 °C
- Detector: Waters 2414 RID
- Standard: PS (polystyrene)

(2) Measurement method of melting point (Tm) and glass transition temperature (Tg)
- Device: DSC (Differential Scanning Calorimetry) 250 (TA Instruments)
- Measurement method: The sample was heated to 250°C, which is higher than the melting temperature of PLA, at a heating rate of 10 °C/min, and then stabilized for 5 minutes. Then, the sample was cooled to -20 °C at a cooling rate of 10°C/min and stabilized for 5 minutes, followed by re-heating to 250°C at a rate of 10°C/min to observe the melting point and glass transition temperature peaks. The temperatures of the melting point peak and the glass transition temperature peak were confirmed and are listed in Table 1 below.

**[Table 1]**

| | Optical purity of PLA | PLA | Compound having epoxy group | | Tm | Tg | Mw | Extrusion Pellet |
|---|---|---|---|---|---|---|---|---|
| | D content (wt.%) | Type | Type | phr | °C | °C | g/mol | Δ Mw(GPC) |
| Example 1 | 3~5 | Preparation Example 1 | (Joncryl) | 1.0 | <160.0 | 58.8 | 226,652 | 20 |
| Example 2 | 10-20 | Preparation Example 2 | (Joncryl) | 1.0 | <160.0 | 57.0 | 190,793 | 45 |
| Comparative Example 1 | <1 | Preparation Example 3 | (Joncryl) | 1.0 | 172.0 | 59.8 | 128,905 | 13 |
| Comparative Example 2 | 1~3 | Preparation Example 4 | (Joncryl) | 1.0 | 163.8 | 59.0 | 132,086 | 17 |
| Comparative Example 3 | <1 | Preparation Example 3 | - | Not used | 173.5 | 59.8 | 150,524 | - |
| Comparative Example 4 | 1~3 | Preparation Example 4 | - | Not used | 166.6 | 59.0 | 203,600 | - |
| Comparative Example 5 | 3~5 | Preparation Example 1 | - | Not used | <160.0 | 58.8 | 189,518 | - |

In Table 1, the compound having an epoxy group is Joncryl ADR 4468 (BASF).

### Experimental Example: Neck-in evaluation of polylactide resin

Each pellet obtained above was vacuum dried at 85°C for at least 4 hours, and PLA film was produced through T-die extrusion molding (Eurotech benchtop monolayer cast film equipment, Screw Ø17.5mm, T-die width 120mm). The neck-in value was actually measured by the film width (X) produced under the same conditions of Calender speed 3.0 M/m and Haul-off speed 4.5 M/m, and the results are shown in Table 2 below.
- Deviation in film width: The value actually measured with 1 m of film produced according to thickness (<100µm, <50µm, <30µm, <20µm)
- Neck-in evaluation: ((T-die width) - (Film width))/2 = (120 - X) / 2

**[Table 2]**

| | Film production (<100µm) | | Film production (<50µm) | | Film production (<30µm) | | Film production (<20µm) | |
|---|---|---|---|---|---|---|---|---|
| | Width deviation (mm) | Neck-in (mm) | Width deviation (mm) | Neck-in (mm) | Width deviation (mm) | Neck-in (mm) | Width deviation (mm) | Neck-in (mm) |
| Example 1 | 1 | 13.5 | 1 | 16.0 | 1 | 17.5 | 1 | 18.0 |
| Example 2 | 1 | 14.0 | 1 | 13.0 | 1 | 13.0 | 1 | 13.5 |
| Comparative Example 1 | 5 | 28.5 | 17 | 37.5 | Not measurable | Not measurable | Not measurable | Not measurable |
| Comparative Example 2 | 14 | 35.0 | 15 | 42.5 | Not measurable | Not measurable | Not measurable | Not measurable |
| Comparative Example 3 | 4 | 28.5 | 12 | 38.0 | Not measurable | Not measurable | Not measurable | Not measurable |

| | | | | | | | | |
|---|---|---|---|---|---|---|---|---|
| Comparative Example 4 | 5 | 29.5 | 6 | 33.5 | 3 | 32.0 | Not measurable | Not measurable |
| Comparative Example 5 | 7 | 28.5 | 4 | 31.5 | 8 | 35.0 | 13 | 38.0 |

The portion marked as "not measurable" in Table 2 means that the Neck-in phenomenon was severe and thus could not be produced into a film.

Referring to the results of Examples in Table 2, the higher the D content of the polylactide resin, the greater the change in molecular weight under the same extrusion process conditions, which means that the melt strength is improved. It was also confirmed that the width deviation was significantly reduced in the films produced at different thickness, which means that the stability of film forming processing was improved. In particular, in the case of Example 2 where the D content was 10 wt.%, the Neck-in phenomenon did not increase even at a thin thickness, which means that it is advantageous for high-speed productivity and cost reduction.

On the other hand, Comparative Examples where the D content was less than 3 wt.% or no compound having an epoxy group was added have the problems that the initial Neck-in value is large, and the Neck-in phenomenon increased as the production speed increased.

## Claims

1. A polylactide resin composition comprising:
a polylactide resin in which a D content in the polylactide resin is 3 to 45 wt.%, and
a compound having an epoxy group.

2. The polylactide resin composition according to claim 1,
wherein the polylactide resin has a melting point peak in a range less than 160°C in a DSC (differential scanning calorimetry) curve.

3. The polylactide resin composition according to claim 1,
wherein the polylactide resin has a D content of 10 to 20 wt.%.

4. The polylactide resin composition according to claim 1,
wherein the compound having an epoxy group is included in an amount of 0.1 to 5.0 parts by weight based on 100 parts by weight of the polylactide resin.

5. The polylactide resin composition according to claim 1,
wherein the polylactide resin has a weight average molecular weight of 70,000 to 400,000.

6. The polylactide resin composition according to claim 1,
wherein the polylactide resin has a number average molecular weight of 50,000 to 100,000.

7. The polylactide resin composition according to claim 1,
wherein the compound having an epoxy group contains two or more epoxy groups in its molecular structure.

8. The polylactide resin composition according to claim 1,
wherein the polylactide resin composition is substantially free of other components other than the polylactide resin and the compound having an epoxy group.

9. The polylactide resin composition according to claim 1,
wherein the polylactide resin composition contains other components other than the polylactide resin and the compound having an epoxy group in an amount of 0.1 part by weight or less, based on 100 parts by weight of the polylactide resin composition.
